# EUROPEAN PATENT APPLICATION

(11) **EP 4 560 844 A1**
(43) Date of publication of application: **28.05.2025**
(21) Application number: 23843173.8
(22) Date of filing: 07.06.2023
(51) Int. Cl.: H01R 13/629, G02F 1/1345, H01R 4/50, G09F 9/35

(54) **CONNECTOR AND DISPLAY DEVICE INCLUDING SAME**

(30) Priority: 20.07.2022 KR 20220089420
(71) Applicant: LG Electronics Inc., Yeongdeungpo-gu Seoul 07336 (KR)
(72) Inventor: KIM, Jeongsoo, Seoul 06772 (KR)
(74) Representative: Schornack, Oliver
(86) International application number: PCT/KR2023/007732
(87) International publication number: WO 2024/019320

(57) **Abstract**

A connector is disclosed. The connector of the present disclosure may include: a housing; a terminal pivotably installed inside the housing, the terminal including: a first part extending long; a second part facing the first part and spaced apart from the first part; and a third part connecting the first part with the second part and in which a pivot shaft of the terminal is positioned; and a cam rotatably installed in the housing and having an outer surface in contact with the first part of the terminal while rotating.

## Description

### TECHNICAL FIELD

The present disclosure relates to a connector and a display device including the same.

### BACKGROUND ART

As the information society develops, the demand for display devices is also increasing in various forms, and in response to this, various display devices such as Liquid Crystal Display Device (LCD), Plasma Display Panel (PDP), Electro luminescent Display (ELD), Vacuum Fluorescent Display (VFD), and Organic Light Emitting Diode (OLED) have been studied and used recently.

Among these, the LCD panel has a TFT substrate and a color substrate that are opposite to each other with a liquid crystal layer interposed therebetween, and can display an image by using light provided from a backlight unit. In addition, an OLED panel can display an image by depositing an organic layer that can emit light for itself on a substrate on which a transparent electrode is formed. In particular, a display device equipped with an OLED panel does not require a backlight unit, thereby being implemented in an ultra-thin form.

Recently, much research has been conducted on a connector that connects a board and a cable.

### DETAILED DESCRIPTION OF INVENTION

### TECHNICAL PROBLEMS

It is an object of the present disclosure to solve the above-described problems and other problems.

Another object may be to provide a structure that can improve the contact defect of a display cable and a connector.

Another object may be to provide a structure that can increase the usable area of a substrate

Another object may be to provide a structure that allows a cable to be compactly fastened in one motion.

### TECHNICAL SOLUTION

In accordance with an aspect of the present disclosure for achieving the above and other objects, a connector may include: a housing; a terminal pivotably installed inside the housing, the terminal including a first part extending long; a second part facing the first part and spaced apart from the first part; and a third part connecting the first part with the second part and in which a pivot shaft of the terminal is positioned; and a cam rotatably installed in the housing and having an outer surface in contact with the first part of the terminal while rotating.

### EFFECT OF INVENTION

The effects of the display device according to the present disclosure will be described as follows.

According to at least one of the embodiments of the present disclosure, it is possible to provide a structure that can improve the contact defect of a display cable and a connector.

According to at least one of the embodiments of the present disclosure, it is possible to provide a structure that can increase the usable area of a substrate.

According to at least one of the embodiments of the present disclosure, it is possible to provide a structure that allows a cable to be compactly fastened in one motion.

Further scope of applicability of the present disclosure will become apparent from the following detailed description. However, it should be understood that the detailed description and specific embodiments such as preferred embodiments of the present disclosure are given by way of illustration only, since various changes and modifications within the spirit and scope of the present disclosure may be clearly understood by those skilled in the art.

### BRIEF DESCRIPTION OF THE DRAWING

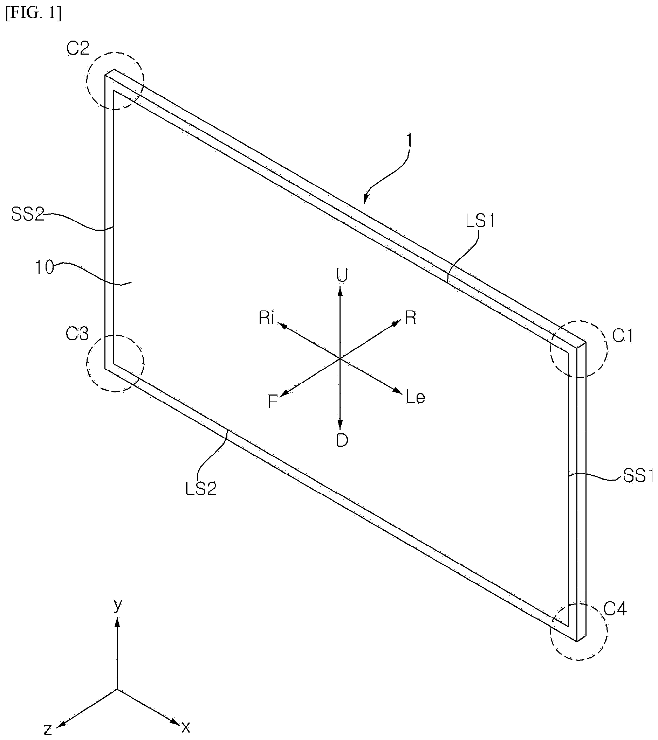

FIGS. 1 to 15 are diagrams illustrating examples of a display device according to embodiments of the present disclosure.

### MODE FOR CARRYING OUT THE INVENTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

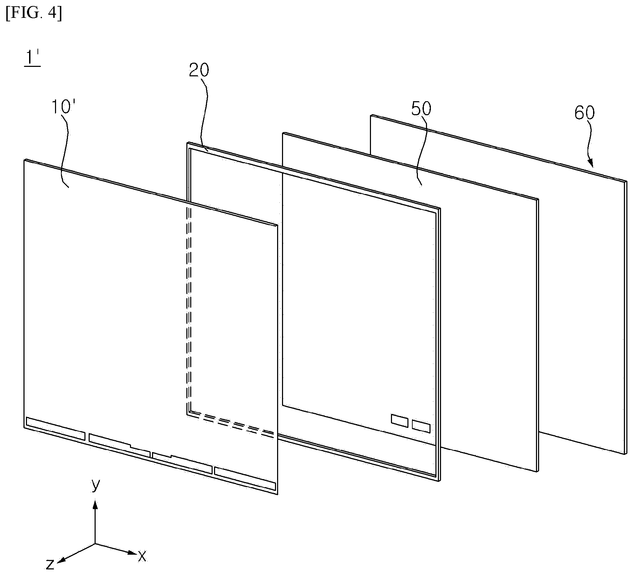

Hereinafter, a display panel of the present disclosure is described as an LCD panel (see FIGS. 1 to 3) or an OLED panel (see FIG. 4), but the type of display panel applicable to the present disclosure is not limited thereto.

Referring to FIG. 1, a display device 1 may include a display panel 10. The display panel 10 may display an image.

The display device 1 may include a first long side LS1, a second long side LS2 opposite to the first long side LS1, a first short side SS1 adjacent to the first and second long sides LS1 and LS2, and a second short side SS2 opposite to the first short side SS1. Meanwhile, for convenience of description, it is illustrated that the length of the long side LS1, LS2 is larger than the length of the short side SS1, SS2, but it may also be possible that the lengths of the long side LS1, LS2 is substantially equal to the length of short side SS1, SS2.

The direction parallel to the long sides LS1 and LS2 of the display device 1 may be referred to as a left-right direction. The direction parallel to the short sides SS1 and SS2 of the display device 1 may be referred to as an up-down direction. The direction perpendicular to the long sides LS1 and LS2 and the short sides SS1 and SS2 of the display device 1 may be referred to as a front-rear direction.

The direction in which the display panel 10 displays images may be referred to as a forward direction (F, z), and the opposite direction may be referred to as a rearward direction R. A side of the first long side LS1 may be referred to as an upper side (U, y). A side of the second long side LS2 may be referred to as a lower side D. A side of the first short side SS1 may be referred to as a left side (Le, x). A side of the second short side SS2 may be referred to as a right side Ri.

The first long side LS1, the second long side LS2, the first short side SS1, and the second short side SS2 may be referred to as an edge of the display device 1. In addition, a point where the first long side LS1, the second long side LS2, the first short side SS1, and the second short side SS2 meet each other may be referred to as a corner.

For example, A point where the first short side SS1 and the first long side LS1 meet may be referred to as a first corner C1. A point where the first long side LS1 and the second short side SS2 meet may be referred to as a second corner C2. A point where the second short side SS2 and the second long side LS2 meet may be referred to as a third corner C3. A point where the second long side LS2 and the first short side SS1 meet may be referred to as a fourth corner C4.

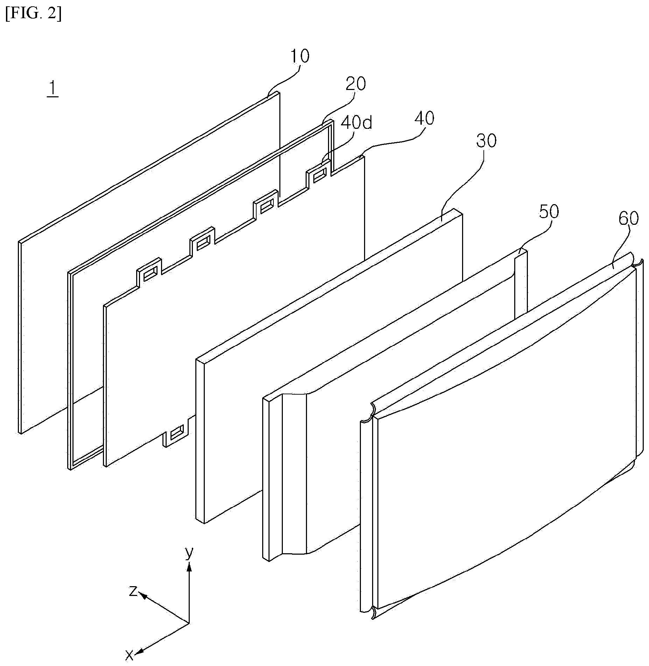

Referring to FIG. 2, the display device 1 may include a display panel 10, a guide panel 20, a backlight unit 30, 40, a frame 50, and a back cover 60.

The display panel 10 may form the front surface of the display device 1, and may display an image. The display panel 10 may display an image by having a plurality of pixels that output Red, Green or Blue (RGB) for each pixel in accordance with a timing. The display panel 10 may be divided into an active area where an image is displayed and a de-active area where an image is not displayed. The display panel 10 may include a front substrate and a rear substrate that are opposite to each other with a liquid crystal layer interposed therebetween. The display panel 10 may be referred to as an LCD panel.

The front substrate may include a plurality of pixels consisting of red, green, and blue subpixels. The front substrate may output a light corresponding to the color of red, green, or blue depending on a control signal.

The rear substrate may include switching elements. The rear substrate may switch a pixel electrode. For example, the pixel electrode may change the molecular arrangement of a liquid crystal layer according to an externally input control signal. The liquid crystal layer may include liquid crystal molecules. The arrangement of liquid crystal molecules may change in response to a voltage difference generated between the pixel electrode and a common electrode. The liquid crystal layer may transmit or block a light provided from the backlight unit 30, 40 to the front substrate.

The guide panel 20 may surround the circumference of the display panel 10 and cover the side surface of the display panel 10. The guide panel 20 may be coupled to the display panel 10 or may support the display panel 10. The guide panel 20 may be referred to as a side frame or a middle cabinet.

The backlight unit 30, 40 may be positioned in a rear of the display panel 10. The backlight unit 30, 40 may include light sources. The backlight unit 30, 40 may be coupled to the frame 50 in front of the frame 50. The backlight unit 30, 40 may be driven by a full driving method or a partial driving method such as local dimming, and impulsive driving. The backlight unit 30, 40 may include an optical sheet 40 and an optical layer 30.

The optical sheet 40 may evenly transmit light from the light source to the display panel 10. The optical sheet 40 may be composed of a plurality of layers. For example, the optical sheet 40 may include a prism sheet or a diffusion sheet. Meanwhile, a coupling portion 40d of the optical sheet 40 may be coupled to the frame 50 and/or the back cover 60.

The frame 50 may be positioned in a rear of the backlight unit 30, 40, and may support the components of the display device 1. The edge of the frame 50 may be fixed to the guide panel 20. For example, a component such as the backlight unit 30, 40, and a Printed Circuit Board (PCB) on which a plurality of electronic devices are positioned may be coupled to the frame 50. For example, the frame 50 may include a metal material. The frame 50 may be referred to as a main frame 50, a module cover 130, or a cover bottom 130.

The back cover 60 may cover the rear of the frame 50. The back cover 60 may be coupled to the frame 50. For example, the back cover 60 may include a metal material.

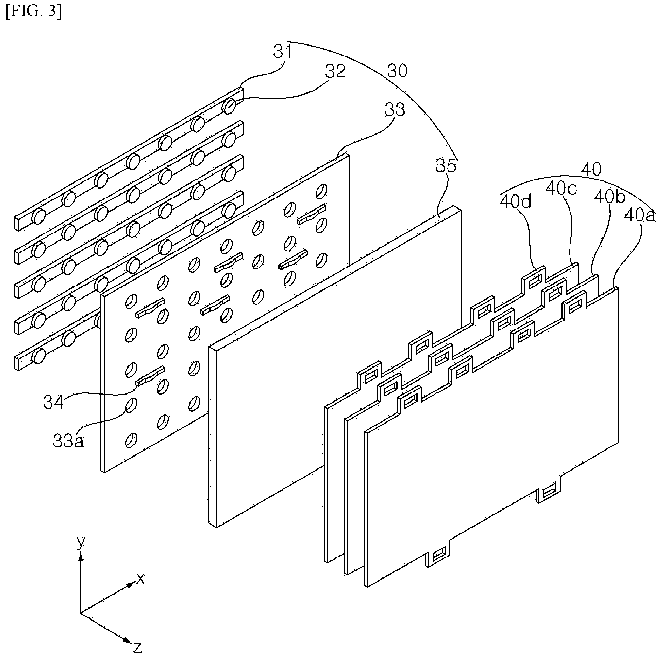

Referring to FIG. 3, the optical layer 30 may include a substrate 31, at least one optical assembly 32, a reflective sheet 33, and a diffusion plate 35. The optical sheet 40 may be positioned in front of the optical layer 30.

The substrate 31 may extend in the left-right direction, and may be provided in the form of a plurality of straps spaced apart from each other in the up-down direction. At least one optical assembly 32 may be mounted on the substrate 31. An electrode pattern may be formed on the substrate 31 to connect an adapter and the optical assembly 32. For example, the electrode pattern may be a carbon nanotube electrode pattern. The substrate 31 may be composed of at least one of polyethylene terephthalate (PET), glass, polycarbonate (PC), and silicon. The substrate 31 may be a printed circuit board (PCB) on which at least one optical assembly 32 is mounted.

The optical assembly 32 may be a light emitting diode (LED) chip or a light emitting diode package including at least one light emitting diode chip. The optical assembly 32 may be composed of a colored LED or a white LED that emits at least one color among colors such as red, green, and blue. The colored LED may include at least one of red LED, green LED, and blue LED

The reflective sheet 33 may be positioned in front of the substrate 31. At least one hole 33a may be formed to penetrate the reflective sheet 33, and the optical assembly 32 may be positioned in the hole 33a. The reflective sheet 33 may reflect a light provided from the optical assembly 32 or reflected from the diffusion plate 35 forward. For example, the reflective sheet 33 may include a metal having a high reflectivity, such as at least one of aluminum Al, silver Ag, gold Au, and titanium dioxide TiO2 and/or metal oxide.

In addition, an air gap may be formed between the reflective sheet 33 and the diffusion plate 35. The air gap may serve as a buffer, and the light provided from the optical assembly 32 may be spread widely by the air gap. A supporter 34 may be positioned between the reflective sheet 33 and the diffusion plate 35, and may form the air gap.

The diffusion plate 35 may be positioned in front of the reflective sheet 33. The diffusion plate 35 may be positioned between the reflective sheet 33 and the optical sheet 40.

The optical sheet 40 may include at least one sheet. For example, the optical sheet 40 may include one or more prism sheets and/or one or more diffusion sheets. A plurality of sheets of the optical sheet 40 may be adhered to or in close contact with each other.

Specifically, the optical sheet 40 may be composed of a plurality of sheets having different functions. For example, the optical sheet 40 may include a first optical sheet 40a, a second optical sheet 40b, and a third optical sheet 40c. For example, the first optical sheet 40a may be a diffusion sheet, and the second optical sheet 40b and the third optical sheet 40c may be a prism sheet. The diffusion sheet may prevent the light emitting from the diffusion plate 35 from being partially concentrated, thereby making the distribution of light more uniform. The prism sheet may condense the light emitting from the diffusion plate 35 and provide it to the display panel 10. Meanwhile, the number and/or location of the diffusion sheet and the prism sheet may be changed.

Referring to FIG. 4, a display device 1' may include a display panel 10', a guide panel 20, a frame 50, and a back cover 60.

The display panel 10' may form the front surface of the display device 1' and may display an image. The display panel 10' may divide an image into a plurality of pixels and output an image by adjusting the color, brightness, and saturation for each pixel. The display panel 10' may be divided into an active area where an image is displayed and a de-active area where an image is not displayed. The display panel 10' may generate light corresponding to the color of red, green, or blue according to a control signal. The display panel 10' may be referred to as an OLED panel.

The guide panel 20' may surround the circumference of the display panel 10' and may cover the side surface of the display panel 10'. The guide panel 20' may be coupled to the display panel 10' or may support the display panel 10'. The guide panel 20' may be referred to as a side frame or a middle cabinet.

The frame 50 may be positioned at the rear of the display panel 10' and may be coupled to the display panel 10'. The edge of the frame 50 may be fixed to the guide panel 20. Electronic components may be mounted on the frame 50. For example, the frame 50 may include a metal material. The frame 50 may be referred to as a main frame, a module cover, or a cover bottom.

The back cover 60 may cover the rear of the frame 50. The back cover 60 may be coupled to the frame 50. For example, the back cover 60 may include a metal material.

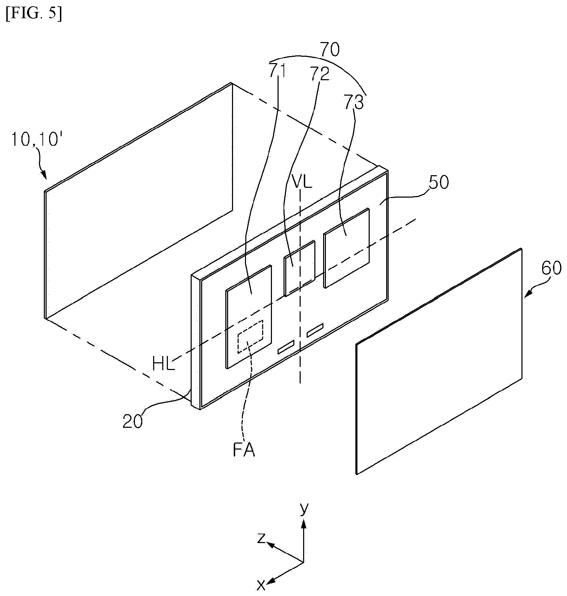

Referring to FIG. 5, boards 70 may be coupled to the frame 50 at the rear of the frame 50. The board 70 may include a plurality of electronic components. The board 70 may be a Printed Circuit Board (PCB) and may be electrically connected to electronic components of the display device.

The boards 70 may include a power supply board 71 that provides power to each component of the display device, a timing controller board 72 that provides an image signal to the display panel 10, 10', and a main board 73 that controls the display device.

For example, the power supply board 71 may be adjacent to the left side of the frame 50. The main board 73 may be adjacent to the right side of the frame 50. The timing controller board 72 may be positioned between the power supply board 71 and the main board 73.

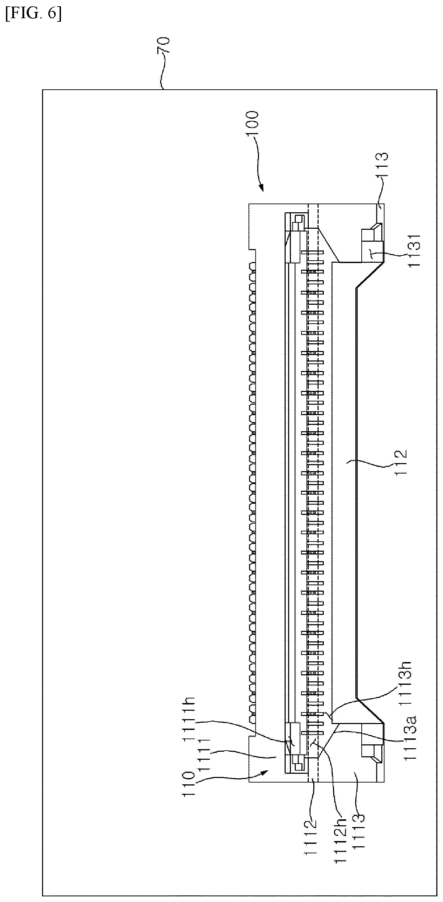

Referring to FIG. 6, the board 70 may be electrically connected to electronic components of the display device 1 through a connector 100. The connector 100 may be coupled to the board 70. The connector 100 may be mounted on the board 70. The board 70 may include a printed circuit board (PCB) on which a certain circuit is printed. The connector 100 may be mounted on the board 70 to electrically connect the board 70 and the cable 2. The cable 2 may electrically connect the board 70 and the electronic component of the display device 1 through the connector 100. For example, the cable 2 may electrically connect the board 70 and the display panel 10 through the connector 100.

The cable 2 may be inserted into the housing 110 of the connector 100. The cable 2 may be inserted into the housing 110 of the connector 100, and at least a portion of the cable may be accommodated in the internal space (not shown) of the housing 110. The internal space (not shown) may be a space surrounded by an upper wall 111, a bottom wall 112, a front wall 113, a rear wall 114, a first side wall 115, and a second side wall 116. A cable insertion hole 1131 into which the cable 2 is inserted may be formed in the housing 110. The cable insertion hole 1131 may be formed in the front wall 113 of the housing 110. The cable insertion hole 1131 may be a hole formed by penetrating the front wall 113 in a first direction in which the cable 2 is inserted. The cable 2 may be inserted into the housing 110 in a direction from the front wall 113 toward the rear wall 114.

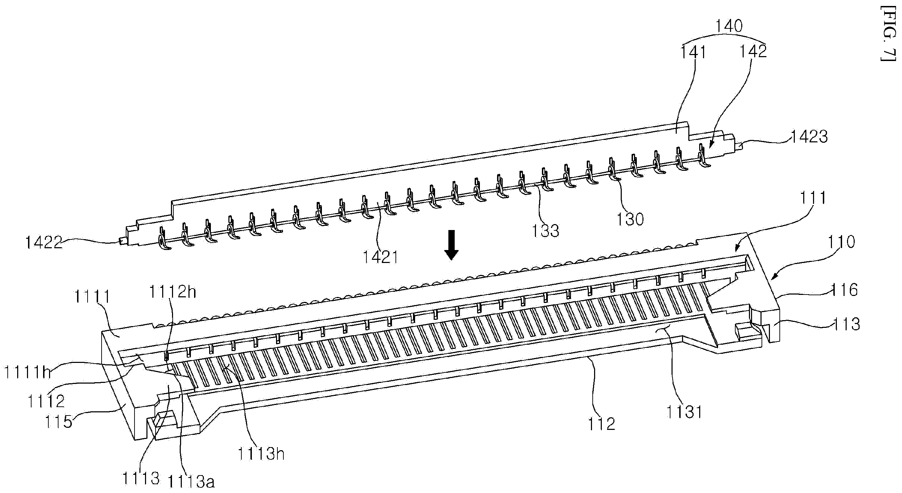

Referring to FIGS. 6 and 7, the frame 140 may be coupled to the housing 110. The frame 140 may support a cam 130. The upper wall 111 may include a first area 1111 in which a first hole 1111h into which the frame 140 is inserted and accommodated is formed. The upper wall 111 may include a second area 1112 in which a second hole 1112h that extends in a forward direction from the first area 1111 and has a smaller width than the first hole 1111h is formed. The upper wall 111 may include a third area 1113 in which a third hole 1113h that extends in a forward direction from the second area 1112 and has a smaller width than the second hole 1112h is formed. The first to third holes 1111h, 1112h, 1113h may be connected. The hole 1111h, 1112h, 1113h of the upper wall 111 may be opened in a forward direction. The hole 1111h, 1112h, 1113h of the upper wall 111 may be connected with the cable insertion hole 1131 of the front wall 113. The first hole 1111h may be formed in a rectangular shape. The second hole 1112h may be formed in a rectangular shape. The third hole 1113h may be formed in a polygonal shape. The second area 1112 may protrude inwardly than the first area 1111. The second area may face both ends of the frame 140. The second area 1112 may overlap both ends of the frame 140 in a first direction. The second area 1112 may fix the frame 140. The second area 1112 and the portion of the first area 1111 that faces the second area 1111 may fix both ends of the frame 140. The third area 1113 may protrude inwardly than the second area 1112. The third area 1113 may vertically overlap the cable 2 inserted into the housing 110. Through this, the cable 2 may be prevented from being separated from the hole 1111h, 1112h, 1113h of the upper wall 111. The connecting surface where the third area 1113 is connected to the second area 1112 may be an inclined surface 1113a.

The frame 140 may be inserted into the housing 110 through the first hole 1111h of the upper wall 111. At least a portion of the frame 140 may be accommodated in the housing 110, and the remaining portion of the frame 140 may be positioned outside the housing 110. The frame 140 may include a lower frame 142 inserted into the housing 110, and an upper frame 141 that extends upward from the lower frame 142 and is exposed to the outside of the housing 110. The length of the upper frame 141 may be shorter than the length of the lower frame 142. The upper frame 141 may increase work convenience when assembling the frame 140 to the housing 110.

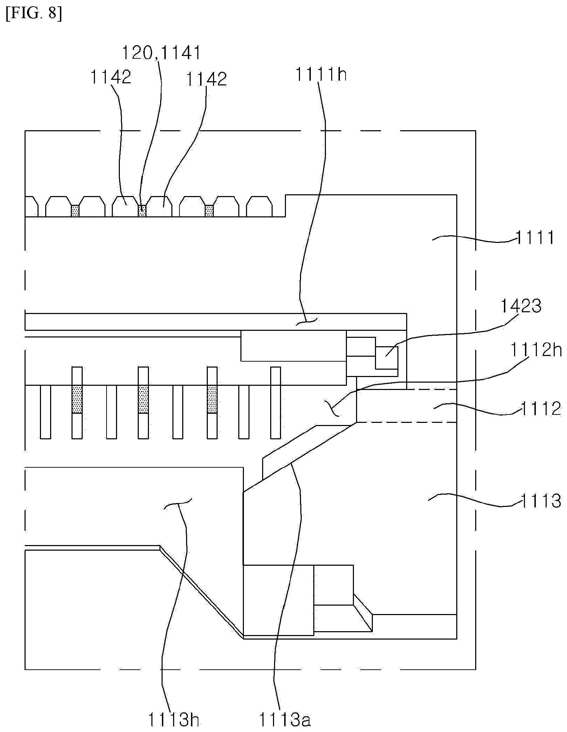

Referring to FIGS. 7 and 8, the lower frame 142 may include a body 1421 to which the cam 130 is coupled, and first and second coupling ends 1422, 1423 that are positioned at both ends of the body 1421 and coupled to the housing 110. The body 1421 may be coupled to the cam 130. A plurality of cams 130 may be coupled to the body 1421. For example, a groove (not shown) that accommodates at least a portion of the cam 130 may be formed in the body 1421. The cam 130 may include a rotational shaft 133. The cam 130 may rotate around the rotational shaft 133. The cam 130 may be rotated by coming into contact with the cable 2. The rotational shaft 133 may penetrate a plurality of cams 130, and the plurality of cams 130 may be simultaneously rotated around the rotational shaft 133. The rotational shaft 133 may be coupled to the body 1421. A first coupling end 1422 may be formed on the left side of the body 1421, and a second coupling end 1423 may be formed on the right side of the body 1421. The first and second coupling ends 1422, 1423 may fix the frame 140 to the housing 110. The first coupling end 1422 may be fixed to the first sidewall 115. The first coupling end 1422 may be positioned between the left first area 1111 and the left second area 1112 of the upper wall 111. The first coupling end 1422 may be fixed to the left first area 1111 and the left second area 1112. The second coupling end 1423 may be fixed to the second side wall 116. The second coupling end 1423 may be positioned between the right first area 1111 and the right second area 1112 of the upper wall 111. The second coupling end 1422 may be fixed to the right first area 1111 and the right second area 1112. The first and second coupling ends 1422, 1423 may have the same structure.

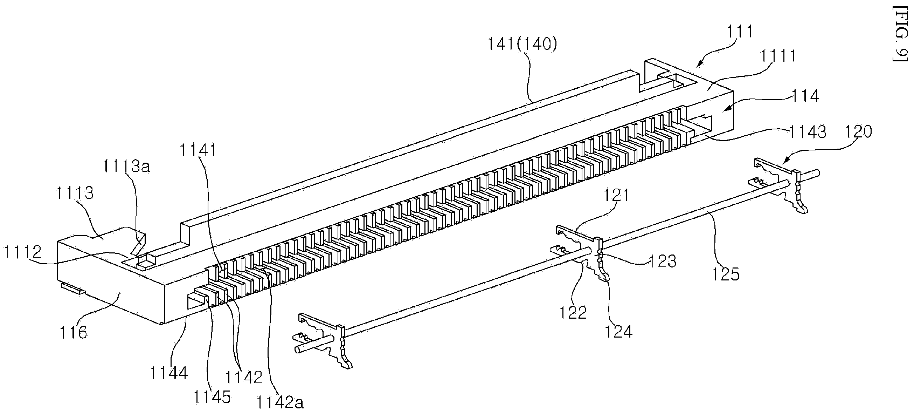

Referring to FIG. 9, a terminal 120 may be inserted into the housing 110. The terminal 120 may be inserted into the housing 110 through the rear wall 114 of the housing 110. A terminal insertion hole 1141 may be formed in the rear wall 114. The terminal insertion hole 1141 may be formed between a plurality of fixing members 1142. The fixing member 1142 may fix the terminal 120 inserted into the terminal insertion hole 1141. The terminal 120 may include a plurality of terminals 120. The terminal 120 may be formed of a conductive material, and the housing 110 and/or the fixing member 1142 may be formed of an insulating material. Through this, the terminal 120 may be electrically connected to the board 70. In addition, the plurality of terminals 120 may be electrically insulated by the fixing members 1142 positioned between the plurality of terminals 120.

The terminal 120 may be coupled to a pivot shaft 125. The terminal 120 may be rotated about the pivot shaft 125. The terminal 120 may be coupled to the pivot shaft 125. The terminal 120 may pivot in the up-down direction about the pivot shaft 125. The pivot shaft 125 may be coupled to a plurality of terminals 120. The plurality of terminals 120 can pivot about the pivot shaft 125 at the same time. The pivot shaft 125 may be coupled to a groove 1142a formed in the fixing member 1142. The groove 1142a may be formed in a plurality of fixing members 1142, and may be formed by being recessed in a direction from the rear wall 114 toward the front wall 113. FIG. 9 illustrates that three terminals 120 are coupled to the pivot shaft 125, but this is for convenience of explanation, and the terminal 120 may be provided in a number corresponding to the number of terminal insertion holes 1141.

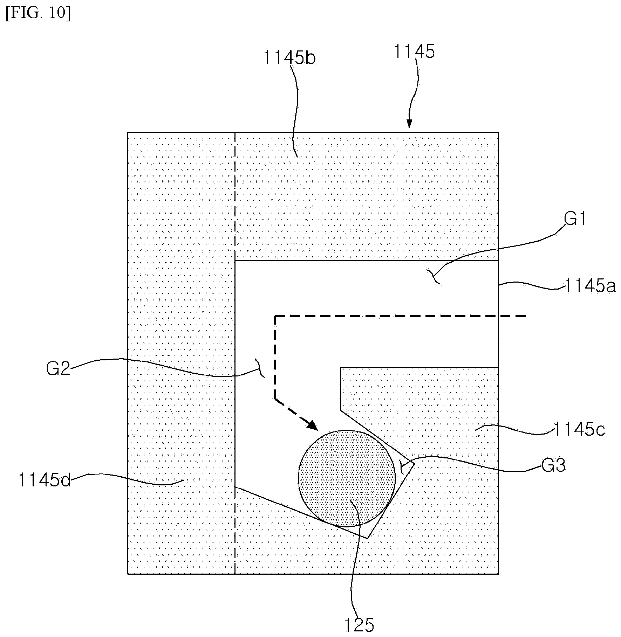

Referring to FIGS. 9 and 10, the rear wall 114 may include a support portion 1143, 1144 that supports both ends of the pivot shaft 125. The support portion 1143, 1144 may include a first support portion 1143 that supports one end of the pivot shaft 125 and a second support portion 1144 that fixes the position of the other end of the pivot shaft 125. A side part 1145 of the first support portion 1143, 1144 may be a part facing the fixing member 1142. The side part 1145 of the first support portion 1143, 1144 may be a portion facing the terminal insertion hole 1141. The first support portion 1143 and the second support portion 1144 may have the same structure.

The side part 1145 may include an opening 1145a. Through the opening 1145a, both ends of the pivot shaft 125 may be introduced into the inside of the side part 1145. The side part 1145 may include a first side part 1145b, a second side part 1145c, and a third side part 1145d. The first side part 1145b may be positioned above the second side part 1145c. The first side part 1145b may be positioned above the pivot shaft 125. The second side part 1145c may be positioned below the pivot shaft 125. The first side part 1145b and the second side part 1145c may face each other. A first space G1 may be formed between the first side part 1145b and the second side part 1145c. The first space G1 may extend in a forward direction from the opening 1145a toward the front wall 113. The first space G1 may extend in a forward direction in a horizontal direction. The third side part 1145d may connect the first side part 1145b and the second side part 1145c. The third side part 1145d may be positioned closer to the front wall 113 than the first side part 1145b and the second side part 1145c.

The second space portion G2 may be formed by being recessed from at least a portion of the upper surface of the second side part 1145c. The second space portion G2 may be formed between the second side part 1145c and the third side part 1145d. The second space portion G2 may be formed between the inner surface of the second side part 1145c and the inner surface of the third side part 1145d. The second space portion G2 may extend in a direction from the upper wall 111 toward the bottom wall 112. The length of the inner surface of the second side part 1145c forming the second space portion G2 may be smaller than the length of the inner surface of the third side part 1145d. Alternatively, the length of the inner surface of the second side part 1145c forming the second space G2 may be the same as the length of the inner surface of the third side part 1145d.

The third space G3 may extend downward from the second space G2. The third space G3 may be formed by being recessed from the inner surface of the second side part 1145c. The third space G3 may be formed to be inclined with respect to the inner surface of the second side part 1145c. The distal end of the pivot shaft 125 may be positioned in the third space G3. The pivot shaft 125 may be accommodated in the third space G3 by sequentially passing through the opening 1145a, the first space G1, and the second space G2. The second side part 1145c may overlap with at least a portion of the distal end of the pivot shaft 125 accommodated in the third space G3 in the vertical direction. Through this, the second side part 1145c may prevent the distal end of the pivot shaft 125 accommodated in the third space G3 from being separated.

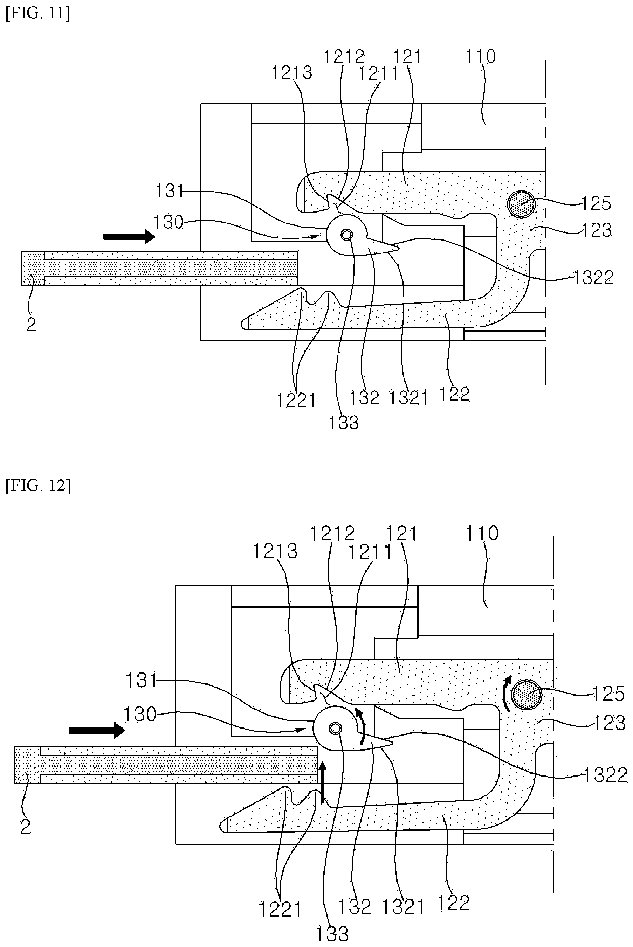

Referring to FIG. 11, the terminal 120 may include a first part 121 and a second part 122 spaced apart from each other in a second direction perpendicular to a first direction in which the cable 2 is inserted, a third part 123 connecting the rear of the first part 121 and the rear of the second part 122, and a fourth part 124 (see FIG. 9) protruding downwardly from the rear of the third part 123. A space may be formed between the first part 121 and the second part 122. The space between the first part 121 and the second part 122 may be opened in a forward direction. The cable 2 may be inserted into the space between the first part 121 and the second part 122. A pivot shaft 125 may be coupled to the third part 123. The fourth part 124 may be a portion that comes into contact with the board 70 (see FIGS. 6 and 9). The fourth part 124 may be mounted on the board 70. The terminal 120 may be electrically connected to the board 70 through the fourth part 124.

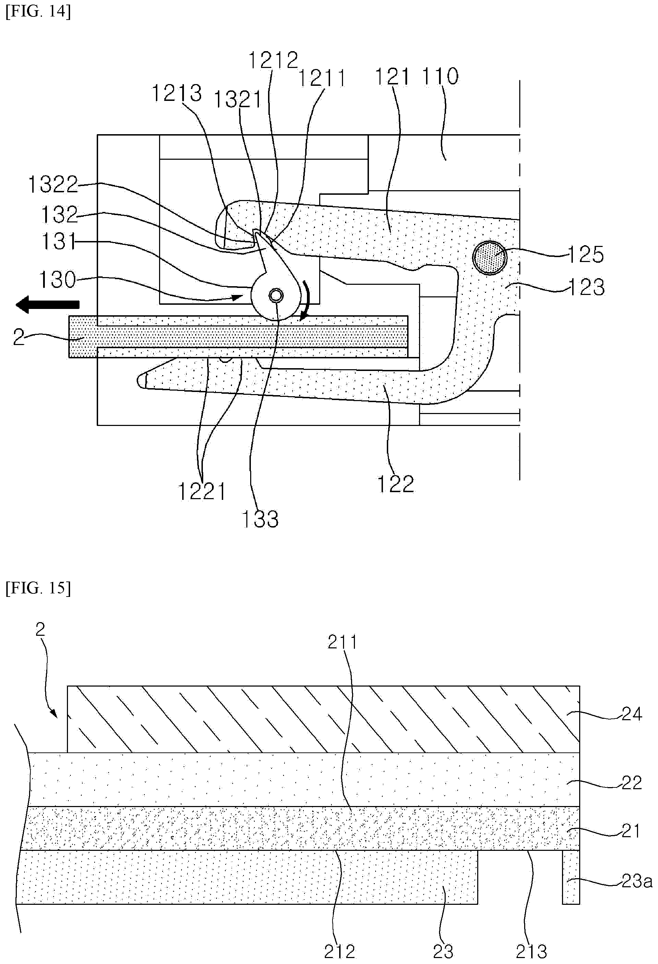

The cam 130 may be positioned between the first part 121 and the second part 122. The cam 130 may be positioned closer to the first part 121 than to the second part 122. The cable 2 may be inserted between the cam 130 and the second part 122. The cam 130 may be rotated by coming into contact with the cable 2. The cam 130 may be rotated so that its outer surface may come into contact with the first part 121 of the terminal 120. When the cam 130 comes into contact, the terminal 120 may pivot upward, and a protrusion 1221 of the terminal 120 may come into contact with a conductor exposure portion 213 (see FIG. 15) of the cable 2.

The cam 130 may include a cam body 131 and a protrusion 132 protruding from the rotating body 131. The cam body 131 may be coupled to the rotational shaft 133. The rotational shaft 133 may extend in a third direction perpendicular to the first and second directions. The rotational shaft 133 may be parallel to the pivot shaft 125 (see FIGS. 7 and 9). The pivot shaft 125 may extend in the third direction. The cam body 131 may have a circular cross-section. The protrusion 132 may protrude from a portion of the cam body 131 in a radial direction of the cam body 131. The protrusion 132 may protrude in a tangential direction of the cam body 131. The protrusion 132 may protrude in a direction that is bent along the outer surface of the cam body 131. The protrusion 132 may include a first surface 1321 connected to the outer surface of the cam body 131, and a second surface 1322 connected to the outer surface of the cam body 131 and the first surface 1321. The first surface 1321 and the second surface 1322 of the protrusion 132 may be formed as a plane. Alternatively, the first surface 1321 and the second surface 1322 of the protrusion 132 may be formed as a curved surface. The first surface 1321 of the protrusion 132 may be referred to as a first curved surface 1321, and the second surface 1322 of the protrusion 132 may be referred to as a second curved surface 1322. The diameter of the protrusion 132 may become smaller as it gets farther away from the cam body 131. The protrusion 132 may have an edge shape including the first surface 1321 and the second surface 1322. The connection portion of the first surface 1321 and the second surface 1322 may be formed as an edge shape. The connection portion of the first surface 1321 and the second surface 1322 may form an edge.

A groove 1211 may be formed in the first part 121 of the terminal 120. The groove 1211 may be formed on a lower surface where the first part 121 faces the second part 122. The groove 1211 may have a reverse edge shape with respect to the edge shape of the protrusion 132. The groove 1211 may have a diameter that becomes smaller from the lower surface of the first part 121 to the upper surface of the first part 121. The groove 1211 may include a first surface 1212 and a second surface 1213. A connecting portion of the first surface 1212 and the second surface 1213 of the groove 1211 may form an edge. The first surface 1212 of the groove 1211 may be connected to the lower surface of the first part 121. The first surface 1212 of the groove 1211 may be formed to be inclined with respect to the lower surface of the first part 121. The second surface 1213 of the groove 1211 may be connected to the lower surface of the first part 121. The second surface 1213 of the groove 1211 may be formed to be inclined with respect to the lower surface of the first part 121. The first surface 1212 of the groove 1211 may be provided as an inclined surface having a gentler slope than the second surface 1213 of the groove 1211. The lower surface of the first part 121 and the first surface 1212 of the groove 1211 may form a first angle. The lower surface of the first part 121 and the second surface 1213 of the groove 1211 may form a second angle. The first angle may be greater than the second angle. For example, the first angle may be an obtuse angle, and the second angle may be an acute angle.

In the initial state where the cam 130 is not rotated, the cam body 131 may face the groove 1211 of the first part 121, and the protrusion 132 may face the third part 123. In the initial state where the cam 130 is not rotated, the second curved surface 1322 of the protrusion 132 may face the first part 121, and the first curved surface 1321 of the protrusion 132 may face the second part 122. In the initial state where the cam 130 is not rotated, the cam 130 may be positioned apart from the first part 121. The cam 130 may be rotated to be positioned at a position where the protrusion 132 comes into contact with the first part 121 (see FIG. 12).

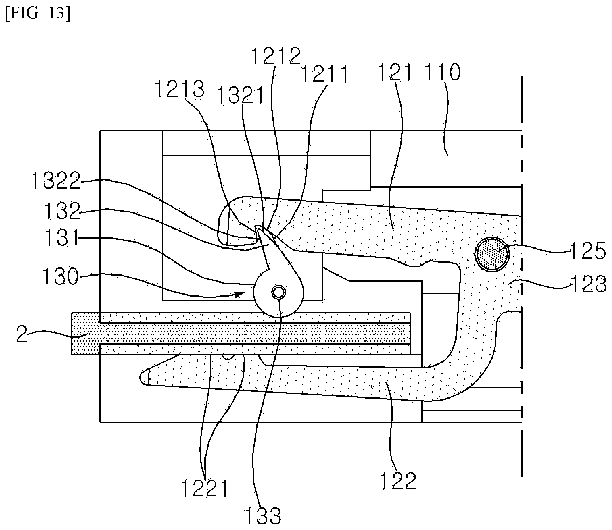

A protrusion 1221 may be formed on the second part 122 of the terminal 120. The protrusion 1221 may protrude in a direction from the second part 122 toward the first part 121. The protrusion 1221 may be in contact with the cable 2 (see FIG. 13). The protrusion 1221 may be in contact with the conductor exposure portion 213 of the cable 2 (see FIGS. 13 and 15). In this case, the terminal 120 and the cable 2 may be electrically connected. The protrusion 1221 may include a plurality of protrusions 1221. For example, the protrusion 1221 may include two protrusions 1221.

Referring to FIGS. 12 and 13, the cam 130 may be rotated by the cable 2. The cam 130 may be rotated by coming into contact with the cable 2. The cam 130 may be rotated around the rotation shaft 133 by coming into contact with the cable 2 inserted in the first direction. At this time, the rotation direction of the cam 130 may be referred to as a first rotation direction. When the cam 130 is rotated, the edge of the protrusion 132 may come into contact with the first part 121. When the cam 130 is rotated, the edge of the protrusion 132 may come into contact with the first part 121 to lift the first part 121. When the protrusion 132 comes into contact with the first part 121, the terminal 120 may be rotated around the pivot shaft 125. When the first part 121 is lifted by the protrusion 132, the terminal 120 may be rotated around the pivot shaft 125. The rotation direction of the terminal 120 may be referred to as a second rotation direction. The first rotation direction and the second rotation direction may be an opposite direction. For example, the first rotation direction may be clockwise, and the second rotation direction may be counterclockwise.

The cable 2 may rotate the cam 130 while being inserted in the first direction. The cam 130 may be rotated to pressurize the cable 2 in the second direction perpendicular to the first direction. The cam 130 may be rotated to pressurize the cable 2 in the direction toward the second part 122. In this case, the cable 2 and the protrusion 1221 of the second part 122 may come into contact. As the first part 121 is lifted by the protrusion 132, the terminal 120 rotates around the pivot shaft 125, so that the second part 122 of the terminal 120 may rise, and the protrusion 1221 of the second part 122 may come into contact with the cable 2. The conductor exposure portion 213 (see FIG. 15) of the cable 2 may come into contact with the protrusion 1221 of the second part 122.

The protrusion 132 may be rotated to be caught in the groove 1211 of the first part 121. The groove 1211 of the first part 121 may restrict the rotation of the cam 130. The first surface 1212 of the groove 1211 may guide the protrusion 132 to the groove 1211. The second surface 1213 of the groove 1211 may be in contact with the protrusion 132 to restrict the rotation of the protrusion 132. When the protrusion 132 is caught in the groove 1211 of the first part 121, the fastening of the cable 2 and the connector 100 may be completed. Accordingly, the cable 2 may be fastened to the connector 100 with one motion of inserting the cable 2 into the connector 100. Since the cable 2 is simply fastened with one motion, the work speed may be increased. In addition, an actuator that flips the housing 110 in a forward or rearward direction may not be required to fasten the cable 2 to the connector 100. Accordingly, it may not be necessary to secure a space for the operation of the actuator. Accordingly, the usable area of the board 70 may be increased.

Referring to FIG. 14, the cable 2 may be separated from the connector 100 through a pulling motion in a direction opposite to the first direction. At this time, the cam 130 may be rotated in a second rotation direction opposite to the first rotation direction, and the terminal 120 may be rotated in the first rotation direction. The cable 2 may be released from the connector 100 in one motion.

Referring to FIG. 15, the cable 2 may be a Flexible Flat Cable (FFC). The cable 2 may include a conductor layer 21 including a first surface 211 and a second surface 212, a first film 22 formed on the first surface 211 of the conductor layer 21, a second film 23 formed on the second surface 212 of the conductor layer 21, and a reinforcing plate 24 formed on the first film 22. The first and second films 22, 23 may be an insulating film. The second film 23 may be formed on at least a portion of the second surface 212 of the conductor layer 21, and may form a conductor exposure portion 213 on the second surface 212 of the conductor layer 21. The conductor exposure portion 213 may be inserted into the connector 100 and may come into contact with the protrusion 1221 of the terminal 120.

The cable 2 may include a conductor detachment prevention film 231 attached across the conductor exposure portion 213. The protrusion 1221 that comes into contact with the conductor exposure portion 213 of the cable 2 does not protrude into the inside of the terminal 120 until the cable 2 is inserted and the cam 130 is rotated, so that upon insertion of the cable 2, the damage and/or detachment of the conductor detachment prevention film 231 due to the protrusion 1221 may be prevented. Accordingly, it is possible to prevent a contact failure between the cable 2 and the connector 100 due to foreign matter.

The cable 2 may not include the conductor detachment prevention film attached across the conductor exposure portion 213. Since the protrusion 1221 that comes into contact with the conductor exposure portion 213 of the cable 2 does not protrude into the inside of the terminal 120 until the cable 2 is inserted and the cam 130 is rotated, the conductor of the cable 2 may not be scratched by the protrusion 1221 when the cable 2 is inserted. Accordingly, the conductor detachment prevention film may be omitted. Accordingly, the conductor detachment prevention film may not be damaged and/or detached, and the contact failure between the cable 2 and the connector 100 due to foreign matter can be prevented.

Referring to FIGS. 1 to 15, a connector 100 according to an aspect of the present disclosure may include: a housing 110; a terminal 120 pivotably installed inside the housing 110, the terminal 120 including a first part 121 extending long; a second part 122 facing the first part 121 and spaced apart from the first part 121; and a third part 123 connecting the first part 121 with the second part 122 and in which a pivot shaft 125 of the terminal 120 is positioned; and a cam 130 rotatably installed in the housing 110 and having an outer surface in contact with the first part 121 of the terminal 120 while rotating.

The cam 130 may include: a cam body 131; and a protrusion 132 which protrudes in a radial direction of the cam body 131 from at least a portion of the cam body 131, wherein the protrusion 132 may come in contact with the first part 121 of the terminal 120 while rotating.

When the cam 130 comes into contact with the first part 121 of the terminal 120, the terminal 120 may pivot upward around the pivot shaft 125.

The cam 130 may include a rotational shaft 133 coupled to the cam body 131, and a rotation direction of the rotational shaft 133 of the cam 130 and a pivotal direction of the pivot shaft 125 of the terminal 120 may be an opposite direction.

The cam 130 may include a rotational shaft 133 coupled to the cam body 131, and the rotational shaft 133 of the cam 130 may be parallel to the pivot shaft 125 of the terminal 120.

The first part 121 of the terminal 120 may include a groove 1211 formed on an inner surface of the first part 121, wherein the protrusion 132 of the cam 130 may be rotated and may be caught in the groove 1211.

The protrusion 132 may include a first surface 1212 and a second surface 1213 connected to the first surface 1212 to form an edge shape, and the groove 1211 of the first part 121 may have a reverse edge shape with respect to the edge shape of the protrusion 132.

Referring to FIGS. 1 to 15, a display device 1 according to an aspect of the present disclosure may include: a display panel 10; a frame 50 positioned at a rear of the display panel 10; a PCB board 70 coupled to the frame 50 and electrically connected to the display panel 10; a connector 100 positioned at the PCB board 70 and electrically connected to the PCB board 70; and a cable 2 inserted into the connector 100 and electrically connected to the connector 100, wherein the connector 100 may include: a housing 110; a terminal 120 pivotably installed inside the housing 110; and a cam 130 rotatably installed in the housing 110, wherein the terminal 120 may include: a first part 121 extending long; a second part 122 facing the first part 121 and spaced apart from the first part 121; and a third part 123 connecting the first part 121 with the second part 122, and in which a pivot shaft 125 of the terminal 120 is positioned, wherein the cam 130 may be in contact with the cable 2 and rotates.

The cam 130 may have an outer surface that comes in contact with the first part 121 of the terminal 120 while rotating.

The second part 122 of the terminal 120 may include a protrusion 132 that protrudes toward the first part 121, wherein when the cam 130 comes in contact with the first part 121 of the terminal 120, the terminal 120 pivots upward around the pivot shaft 125, so that the protrusion 132 comes in contact with the cable 2.

The cam 130 may include: a cam body 131; and a protrusion 132 protruding in a radial direction of the cam body 131 from at least a portion of the cam body 131, wherein the protrusion 132 may come in contact with the first part 121 of the terminal 120 while rotating.

The first part 121 of the terminal 120 may include a groove 1211 formed at an inner surface of the first part 121, wherein the protrusion 132 of the cam 130 may be rotated and may be caught in the groove 1211.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

The above detailed description is to be construed in all aspects as illustrative and not restrictive. The scope of the present disclosure should be determined by reasonable interpretation of the appended claims, and all changes coming within the equivalency range of the present disclosure are intended to be embraced in the scope of the present disclosure.

## Claims

1. A connector comprising:
a housing;
a terminal pivotably installed inside the housing, the terminal including:
a first part extending long;
a second part facing the first part and spaced apart from the first part; and
a third part connecting the first part with the second part and in which a pivot shaft of the
terminal is positioned; and
a cam rotatably installed in the housing and having an outer surface in contact with the first part of the terminal while rotating.

2. The connector of claim 1, wherein the cam comprises:
a cam body; and
a protrusion protruding in a radial direction of the cam body from at least a portion of the cam body,
wherein the protrusion comes in contact with the first part of the terminal while rotating.

3. The connector of claim 2, wherein when the cam comes into contact with the first part of the terminal, the terminal pivots upward about the pivot shaft.

4. The connector of claim 3, wherein the cam comprises a rotational shaft coupled to the cam body, and a rotation direction of the rotational shaft of the cam and a pivotal direction of the pivot shaft of the terminal are an opposite direction.

5. The connector of claim 2, wherein the cam comprises a rotational shaft coupled to the cam body, wherein the rotational shaft of the cam is parallel to the pivot shaft of the terminal.

6. The connector of claim 2, wherein the first part of the terminal comprises a groove formed at an inner
surface of the first part,
wherein the protrusion of the cam is rotated and is caught in the groove.

7. The connector of claim 6, wherein the protrusion comprises a first surface and a second surface connected
to the first surface to form an edge shape,
wherein the groove of the first part has a reverse edge shape with respect to the edge shape of the protrusion.

8. A display device comprising:
a display panel;
a frame positioned behind the display panel;
a PCB board coupled to the frame and electrically connected to the display panel;
a connector positioned at the PCB board and electrically connected to the PCB board; and
a cable inserted into the connector and electrically connected to the connector,
wherein the connector comprises:
a housing;
a terminal pivotably installed inside the housing; and
a cam rotatably installed in the housing,
wherein the terminal comprises:
a first part extending long;
a second part facing the first part and spaced apart from the first part; and
a third part connecting the first part with the second part, and in which a pivot shaft of the terminal is positioned,
wherein the cam is in contact with the cable and rotates.

9. The display device of claim 8, wherein the cam has an outer surface that comes in contact with the first part of the terminal while rotating.

10. The display device of claim 9, wherein the second part of the terminal comprises a protrusion that
protrudes toward the first part,
wherein when the cam comes in contact with the first part of the terminal, the terminal pivots upward about the pivot shaft, so that the protrusion comes in contact with the cable.

11. The display device of claim 10, wherein the cam comprises:
a cam body; and
a protrusion protruding in a radial direction of the cam body from at least a portion of the cam body,
wherein the protrusion comes in contact with the first part of the terminal while rotating.

12. The display device of claim 11, wherein the first part of the terminal comprises a groove formed at an inner
surface of the first part,
wherein the protrusion of the cam is rotated and is caught in the groove.
